# EUROPEAN PATENT APPLICATION

(11) **EP 2 404 678 A2**
(43) Date of publication of application: **11.01.2012**
(21) Application number: 10748928.8
(22) Date of filing: 02.03.2010
(51) Int. Cl.: B05B 15/00, B05B 1/00

(54) **APPARATUS FOR JETTING COMPRESSED AIR, AND METHOD FOR MANUFACTURING SAME**

(30) Priority: 04.03.2009 KR 20090018521
(71) Applicant: Ejin Engineering Co., Ltd, Ulsan 680-110 (KR)
(72) Inventor: JUNG, Moon-Ho, Ulsan 680-747, (KR)
(74) Representative: Roos, Peter
(86) International application number: PCT/KR2010/001282
(87) International publication number: WO 2010/101386

(57) **Abstract**

Provided is an apparatus for jetting compressed air and a method of manufacturing the apparatus. The apparatus includes: an air intake pipe having a discharge hole, through which compressed air received from outside the apparatus is discharged, formed on an outer surface having a curved or multilateral shape; and an amplifying unit having a contact surface combining to the outer surface by having a curved or multilateral shape corresponding to the outer surface, and including an inlet portion wherein an inlet hole corresponding to the discharge hole is formed on the contact surface, and an outlet portion for amplifying and discharging the compressed air received through the inlet hole on the contact surface. As such, by forming the contact surface of the amplifying unit to have a curved or multilateral shape corresponding to the outer surface of the air intake pipe, the contact surface of the amplifying unit and the outer surface of the air intake pipe may be closely and uniformly bound together. Accordingly, the flow of the compressed air flowing into the amplifying unit through the air intake pipe may be constant and the compressed air may be prevented from being lost to outside the apparatus, and thus jetting efficiency of the compressed air discharged through the amplifying unit may be increased while instantly jetting a large amount of air by discharging surrounding air with the compressed air.

## Description

### [Technical Field]

The present invention relates to an apparatus for jetting compressed air and a method of manufacturing the apparatus, and more particularly, to an apparatus for jetting compressed air, which amplifies and discharges received compressed air, and a method of manufacturing the apparatus.

### [Background Art]

Various apparatuses for jetting compressed air using the Coanda effect have been disclosed. In such apparatuses, an air intake pipe and an amplifying unit are generally combined to each other. The air content and speed of the compressed air flowed in through the air intake pipe increase as the compressed air passes through the amplifying unit, and the compressed air may be discharged in such an amplified state.

Since a cross section of the air intake pipe is circular, a surface of the air intake pipe combined to the amplifying unit is curved. However, a surface of the amplifying unit combined to the air intake pipe is flat. In other words, since the surfaces of the air intake pipe and the amplifying unit have different shapes, it is difficult to uniformly contact and connect the surfaces.

Accordingly, the contact between the surface of the air intake pipe and the surface of the amplifying unit becomes uneven. Such uneven contact causes the compressed air to be unevenly jetted and the amount and speed of the compressed air discharged through the amplifying unit to be decreased, thereby deteriorating jetting efficiency of the compressed air. Moreover, due to the difference between the shapes of surfaces, there is a limit to combining the surfaces and filling a space between the surface via welding or the like, and a gap may still exist after the combining.

### [Disclosure]

### [Technical Problem]

The present invention provides an apparatus for jetting compressed air, where jetting efficiency of the compressed air is increased since an air intake pipe and amplifying unit are uniformly combined to each other without a gap, and a method of manufacturing the apparatus.

### [Technical Solution]

According to an aspect of the present invention, there is provided an apparatus for jetting compressed air, the apparatus including: an air intake pipe having a discharge hole, through which compressed air received from outside the apparatus is discharged, formed on an outer surface having a curved or multilateral shape; and an amplifying unit having a contact surface combining to the outer surface by having a curved or multilateral shape corresponding to the outer surface, and including an inlet portion wherein an inlet hole corresponding to the discharge hole is formed on the contact surface, and an outlet portion for amplifying and discharging the compressed air received through the inlet hole on the contact surface.

According to another aspect of the present invention, there is provided a method of manufacturing an apparatus for jetting compressed air, the method including: preparing an air intake pipe having a discharge hole, from which compressed air received from outside the apparatus is discharged, on a outer surface having a curved or multilateral shape; preparing an amplifying unit including an inlet portion wherein an inlet hole corresponding to the discharge hole is formed on a contact surface, and an outlet portion for amplifying and discharging the compressed air received through the inlet hole on the contact surface; molding the contact surface of the inlet portion to have a curved or multilateral shape corresponding to the outer surface of the air intake pipe so that the contact surface of the inlet portion contacts and is combined to the outer surface of the air intake pipe; and integrally forming the outer surface and the contact surface as one body by sealing and binding the outer surface and the contact surface without any gap via welding, bonding, screwing, or pressing.

### [Advantageous Effects]

According to the apparatus for jetting compressed air, and the method of manufacturing the apparatus of the present invention, the contact surface of the amplifying unit and the outer surface of the air intake pipe can be closely and uniformly bound by forming the contact surface to have a curved or multilateral shape to correspond to the outer surface of the air intake pipe. Accordingly, the compressed air flowed into the amplifying unit through the air intake pipe can uniformly flow on the contact surface and the compressed air can be prevented from being lost to outside the apparatus. Thus, the jetting efficiency of the compressed air discharged through the amplifying unit can be increased while instantly discharging a large amount of air by discharging the compressed air with the surrounding air.

### [Description of Drawings]

FIG. 1 is a plan view of an apparatus for jetting compressed air, according to an embodiment of the present invention;
FIG. 2 is a plan view of the apparatus of FIG. 1 when a cover portion is removed;
FIG. 3 is a combined diagram of a front view and cross-sectional view of the apparatus of FIG. 1;
FIG. 4 is a cross-sectional view taken along a line IV-IV of FIG. 1;
FIG. 5 is a right side view of the apparatus of FIG. 1;
FIG. 6 is a plan view of the cover portion of FIG. 1; and
FIG. 7 is a cross-sectional view of the cover portion where a top of an outer wall is curved to surround an outer edge of the cover portion.

### [Best Mode]

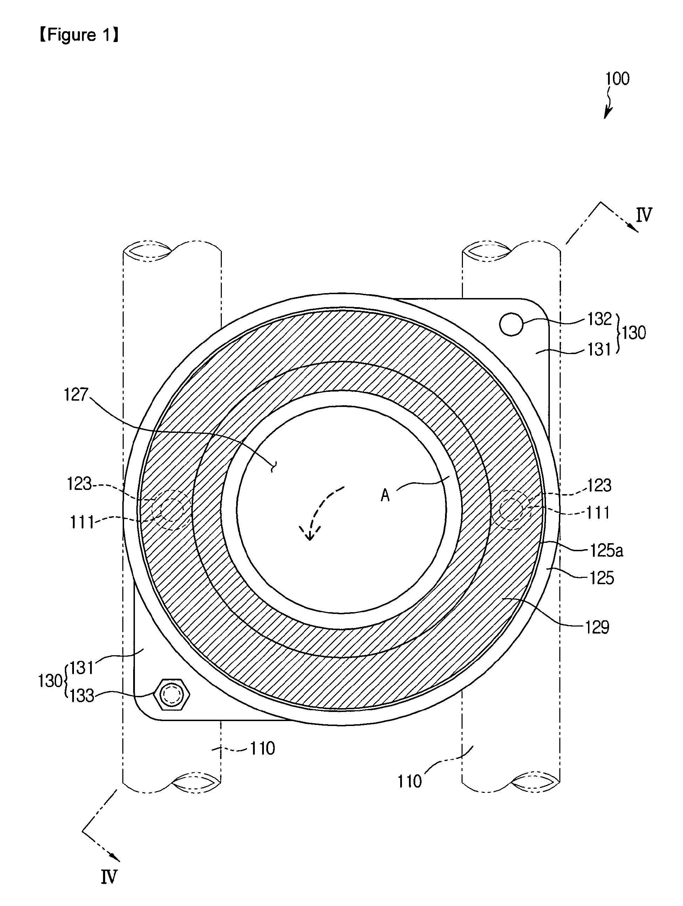

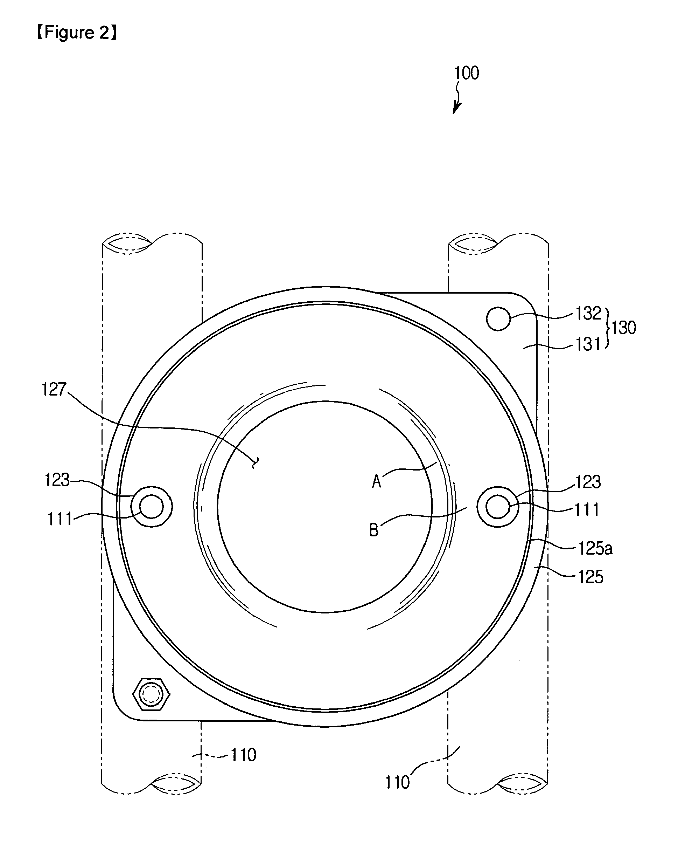

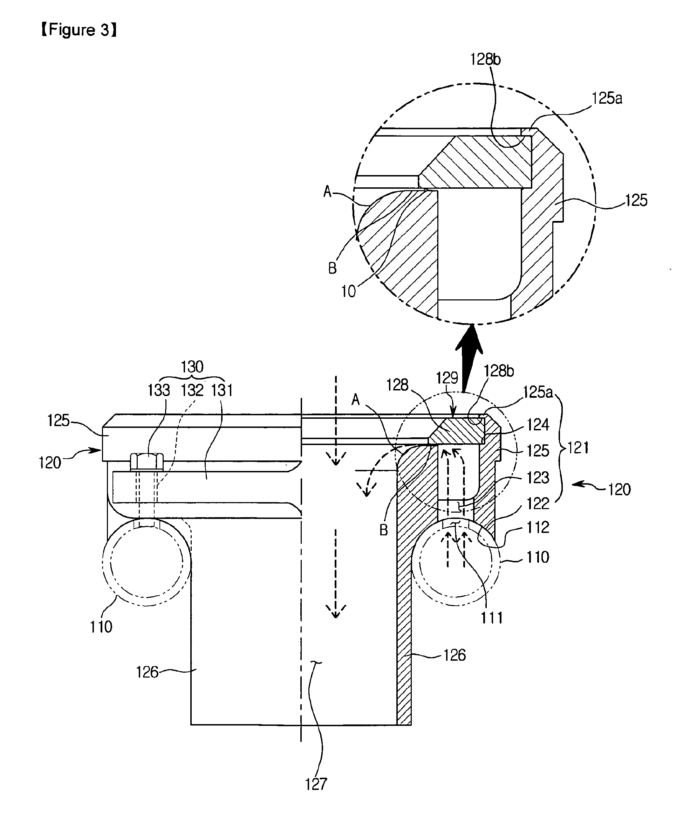

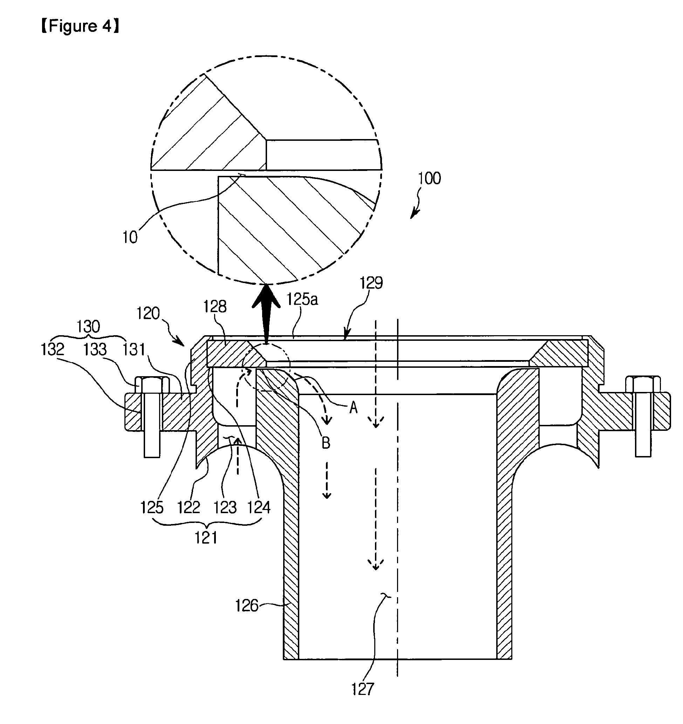

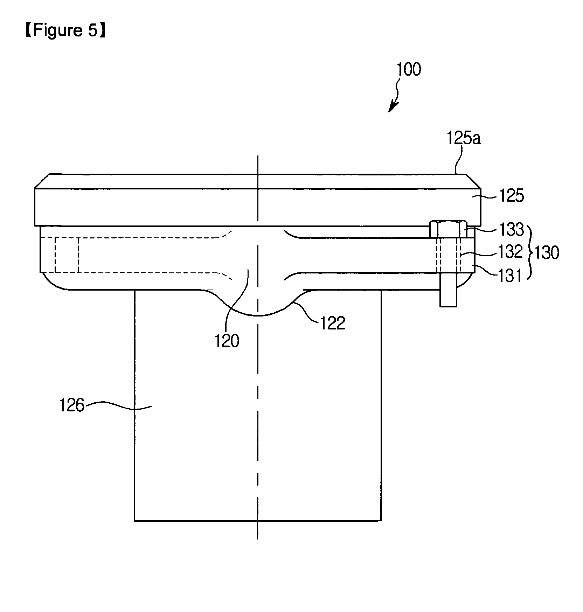

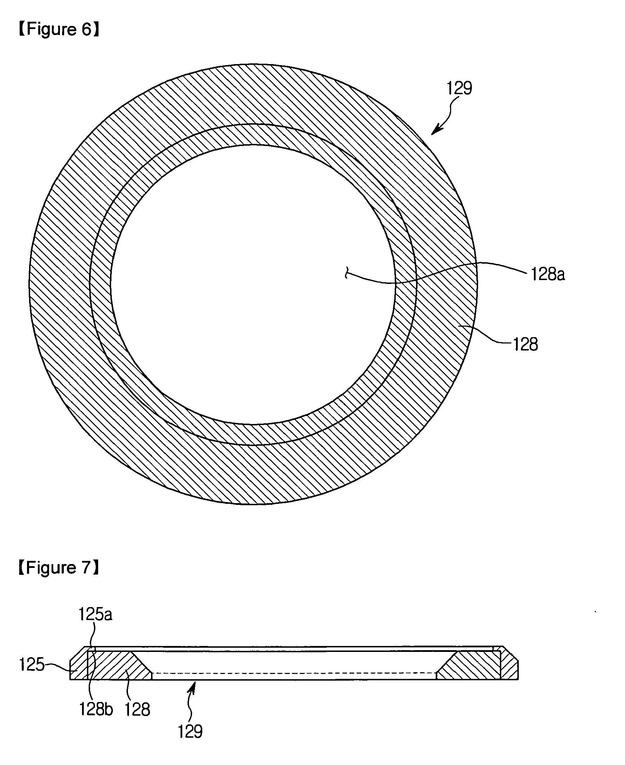

FIG. 1 is a plan view of an apparatus 100 for jetting compressed air, according to an embodiment of the present invention, FIG. 2 is a plan view of the apparatus 100 of FIG. 1 when a cover portion 129 is removed, and FIG. 3 is a combined diagram of a front view and cross-sectional view of the apparatus of 100 FIG. 1,, wherein a left view is the front view and a right view is the cross-sectional view based on a center line. FIG. 4 is a cross-sectional view taken along a line IV-IV of FIG. 1 and FIG. 5 is a right side view of the apparatus 100 of FIG. 1. FIG. 6 is a plan view of the cover portion 129 of FIG. 1, FIG. 7 is a cross-sectional view of the cover portion 129 where a top 125a of an outer wall 125 is curved to surround an outer edge 128b of the cover portion 129, and FIG.

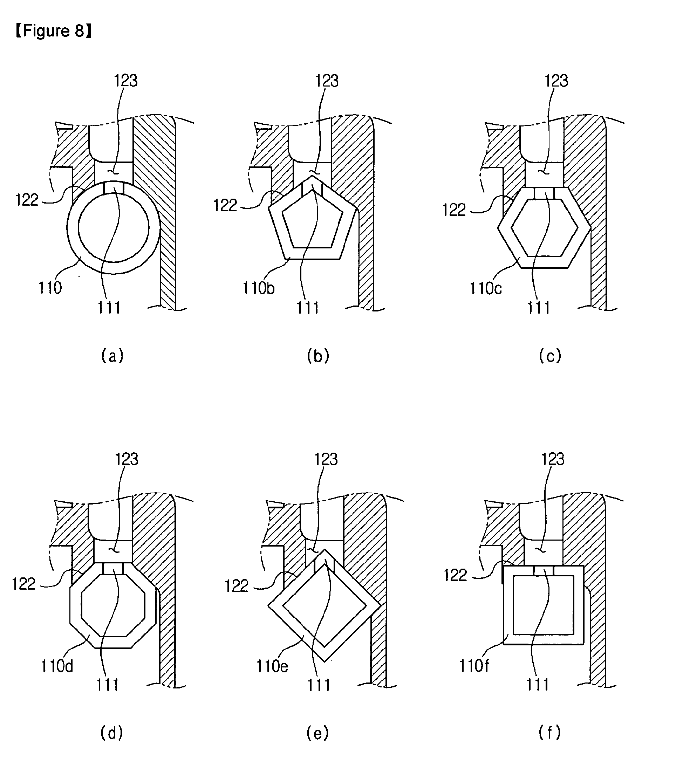

Referring to FIGS. 1 and 3 through 5, the apparatus 100 includes the air intake pipe 110 and an amplifying unit 120. Compressed air flows into the air intake pipe 110 from outside the apparatus 100, and the flowed in compressed air may be discharged toward the amplifying unit 120. Accordingly, the air intake pipe 110 includes a discharge hole 111 from which the compressed air is discharged and formed on an outer surface having a curved or multilateral shape. Here, referring to FIGS. 8A through 8F, a cross section of the air intake pipe 110 has a general circular or multilateral shape, and the outer surface 112 also has a corresponding circular or multilateral shape. FIG. 8A shows the air intake pipe 110 having a circular shape and FIGS. 8B through 8F show air intake pipes 110b through 110f having multilateral shapes, i.e., respectively having a pentagonal shape, hexagonal shape, octagonal shape, and tetragonal shape. The air intake pipe 110 of FIGS. 1 through 4 has the circular shape having a curved surface as shown in FIG. 8A, but referring to FIGS. 8B through 8F, the shape of the air intake pipe 110 is not limited thereto.

Meanwhile, the amplifying unit 120 is where the compressed air is flowed in through the discharge hole 111 of the air intake pipe 110, and the flowed in compressed air is amplified and discharged to outside the apparatus 100. The amplifying unit 120 includes an inlet portion 121 and an outlet portion 126.

First, the inlet portion 121 has a contact surface 122 contacting the outer surface 112 of the air intake pipe 110. In other words, referring to FIG. 1, the contact surface 122 has a curved shape (for example, a concave shape if the air intake pipe 110 is circular) corresponding to the shape of the outer surface 112 of the air intake pipe 110 (for example, a convex shape if the air intake pipe 110 is circular), and thus may closely and uniformly contact and be combined to the outer surface 112. Here, if the outer surface 112 of the air intake pipe 110 has a multilateral shape as shown in FIGS. 8B through 8F, the contact surface 122 has a multilateral shape corresponding to the outer surface 112. Meanwhile, an inlet hole 123 corresponding to the discharge hole 111 of the air intake pipe 110 is formed on the contact surface 122 of the inlet portion 121.

As described above, since the outer surface 112 having the convex shape and the contact surface 122 having the concave shape may closely and uniformly contact each other, a flow of the compressed air flowed into the amplifying unit 120 through the air intake pipe 110 may be constant and the compressed air may be prevented from being lost to outside the apparatus 100, and thus straightnesss of the compressed air with respect to a flowing direction may be improved. In other words, such uniform contact increases jetting efficiency of the compressed air discharged through the amplifying unit 120 later. Alternatively, if contact between the outer surface 112 and the contact surface 122 is not uniform, an amount and speed of the compressed air discharged through the amplifying unit 120 later are decreased, and thus the jetting efficiency of the compressed air may be deteriorated.

Meanwhile, in order to increase the jetting efficiency of the compressed air, the outer surface 112 of the air intake pipe 110 and the contact surface 122 of the inlet portion 121 may be integrally sealed and bound as one body via welding, bonding, screwing, or pressing so that there is no gap therebetween, i.e., so that there is no gap throughout the sealed and bound regions. However, the outer surface 112 and the contact surface 122 may be sealed and bound via a method other than those described above. If the outer surface 112 of the air intake pipe 110 and the contact surface 122 of the inlet portion 121 are not sealed properly, principles of the Coanda effect may not be effectively used, and thus it is clear that Coanda effects may be remarkably reduced if the sealing is perfectly performed.

Referring to FIGS. 1 through 5, the amplifying unit 120 further includes a combinable wing portion 130 bolted to the air intake pipe 110 so as to improve and supplement characteristics of the sealing and binding (welding, bonding, screwing, or pressing) by subsidiarily combining the outer surface 112 of the air intake pipe 110 and the contact surface 122 of the amplifying unit 120. For example, the combinable wing portion 130 may include a subsidiary plate 131 protruding from an outer side of the inlet portion 121 corresponding to a top of the air intake pipe 110 and parallel to the air intake pipe 110, a combining hole 132 formed by penetrating through the subsidiary plate 131 up and down, and a bolt 133 combined to the air intake pipe 110 through the combining hole 132. Here, the combinable wing portion 130 and the air intake pipe 110 may be combined via a well known method, such as welding or clamping, aside from the bolting.

The outlet portion 126 included in the amplifying unit 120 is a portion where the compressed air flowed in through the inlet hole 123 of the contact surface 122 is amplified and discharged. Such amplifying and discharging is performed by using the Coanda effect, and will be described later in detail.

Referring to FIGS. 1 and 3, two air intake pipes 110 may be disposed in parallel to each other respectively at sides of the amplifying unit 120. Here, two inlet portions 121 are respectively disposed at the sides of the amplifying unit 120 according to the number of air intake pipes 110, and thus the sides of the amplifying unit 120 are settled on the two air intake pipes 110.

In other words, the compressed air flowed into the two inlet portion 121 through the two air intake pipes 110 may be amplified and discharged by one outlet portion 126. When the numbers of air intake pipes 110 and inlet portions 121 are each two, more compressed air may be simultaneously flowed in than when the numbers are each one, and thus more compressed air may be amplified and discharged at once at a high speed.

Here, two air supply portions (not shown) for supplying air to the two air intake pipes 110 may be disposed according to the number of air intake pipes 110, so that the air intake pipes 110 individually receive the air from the air supply portions. Alternatively, one air supply portion may be branched and connected to the two air intake pipes 110.

Referring to FIGS. 3 and 4, an air outlet hole 127 penetrating through the outlet portion 126 up and down may be formed to discharge the amplified compressed air. Here, a diameter of an upper side A of an inner circumferential surface of the air outlet hole 127 may increase upward so as to connect to a top B of the outer edge of the outlet portion 126 in a curved shape. Also, the inlet portion 121 surrounds the outer edge of the outlet portion 126, and includes the inlet hole 123 in an up-and-down direction on a region facing the discharge hole 111 of the air intake pipe 110. The inlet portion 121 includes the outer wall 125 having inner jaws 124 having a height higher than the top B of the outer edge of the outlet portion 126.

Here, the amplifying unit 120 includes the cover portion 129 for covering the top of the amplifying unit 120. Referring to FIG. 6, the cover portion 129 includes a through hole 128a at the center communicating with the air outlet hole 127, and a perimeter portion 128 at the outer side substantially forming a cover surface.

Referring to FIGS. 1, 3, and 4, a communicating space 10 is formed in a circumferential direction between the top B of the outer edge of the outlet portion 126 and a bottom surface of the perimeter portion 128 as the perimeter portion 128 of the cover portion 129 covers and is spaced apart from the top of the outlet portion 126 by being spaced on the inner jaws 124. In other words, the communicating space 10 has an approximately donut shape when viewed from a plane. Here, a space between the top B of the outer edge of the outlet portion 126 and the bottom surface of the perimeter portion 128 may be minute, from about 0.4 to about 0.6 mm. In other words, the compressed air flowed in through the inlet hole 123 is amplified and discharged according to the Coanda effect by passing through the communicating space 10 having a minute height, and thus is amplified and discharged toward a lower side (indicated by an arrow) of the air outlet hole 127 while sucking surrounding air. The apparatus 100 before the cover portion 129 is placed on is shown in FIG. 2 to be compared with the apparatus 100 with the cover portion 129 of FIG. 1. Here, the communicating space 10 is a gap constant along the circumferential direction of the top B of the outer edge of the outlet portion 126, and the Coanda effect is increased if a jetting speed of the compressed air under a high pressure is equal to or above a supersonic speed of 100 to 400 m/sec through such a gap. Also, the compressed air may be jetted at a same amount in the circumferential direction, and when the compressed air is jetted, surrounding air may be also discharged according to principles of an ejector.

Here, referring to FIG. 7, the cover portion 129 placed on the inner jaws 124 of the inlet portion 121 may be stably fixed since the top 125a of the outer wall 125 of the inlet portion 121 has an inward curved shape to surround the outer edge 128b of the cover portion 129. Here, the top 125a of the outer wall 125 may be curved inward by using any well known method, such as pressurizing.

A method of manufacturing the apparatus 100 will now be simply described with reference to FIGS. 1 through 7. First, the air intake pipe 110 having the discharge hole 111, through which the compressed air flowed in from outside the apparatus 100, formed on the outer surface 112 having a curved or multilateral shape is prepared. Then, the amplifying unit 120 including the inlet portion 121 wherein the inlet hole 123 corresponding to the discharge hole 111 is formed on the contact surface 122, and the outlet portion 126 for amplifying and discharging the compressed air received through the inlet hole 123 of the contact surface 122 is prepared.

Next, the contact surface 122 of the inlet portion 121 is molded to have a curved or multilateral shape corresponding to the outer surface 112 of the air intake pipe 110 so that the contact surface 122 of the inlet portion 121 contacts and is combined to the outer surface 112 of the air intake pipe 110. For example, when the air intake pipe 110 having a circular shape has a convex surface, the contact surface 122 is flat before being molded, but may be molded to a concave surface via a separate process so that the outer surface 112 and the contact surface 122 uniformly contact each other. Here, any well known method may be used to mold the contact surface 122. Then, the outer surface 112 and the contact surface 122 having the corresponding shapes are integrally tightly sealed and bound without any gap via welding, bonding, screwing, or pressing. Then, the combinable wing portion 130 and the air intake pipe 110 are combined via bolting, welding, or clamping.

Each component of the amplifying unit 120 described above may be manufactured via aluminum casting and mechanical processing. According to the mechanical processing, the compressed air may be uniformly jetted, and the circumferential direction of the cover portion 129 may be uniformly sealed later.

While the present invention has been particularly shown and described with reference to exemplary embodiments thereof, it will be understood by those of ordinary skill in the art that various changes in form and details may be made therein without departing from the spirit and scope of the present invention as defined by the following claims.

### [Industrial Applicability]

According to the present invention, since the compressed air is discharged through the amplifying unit along with the surrounding air at the same time, the apparatus 100 may be used to effectively eliminate pollutants adhered to a filter.

## Claims

1. An apparatus for jetting compressed air, the apparatus comprising:
an air intake pipe having a discharge hole, through which compressed air received from outside the apparatus is discharged, formed on an outer surface having a curved or multilateral shape; and
an amplifying unit having a contact surface combining to the outer surface by having a curved or multilateral shape corresponding to the outer surface, and comprising an inlet portion wherein an inlet hole corresponding to the discharge hole is formed on the contact surface, and an outlet portion for amplifying and discharging the compressed air received through the inlet hole on the contact surface.

2. The apparatus of claim 1, wherein the outer surface of the air intake pipe and the contact surface of the inlet portion is integrally sealed and bound as one body such that there is no gap between the outer surface and the contact surface.

3. The apparatus of claim 2, wherein the amplifying unit further comprises a combinable wing portion bolted to the air intake pipe so as to increase characteristics of the sealing and binding by subsidiarily combining the outer surface of the air intake pipe and the contact surface of the amplifying unit.

4. The apparatus of claim 1, wherein two air intake pipes are disposed, and two inlet portions are respectively included at sides of the amplifying unit to correspond to the number of air intake pipes such that the sides of the amplifying unit are settled on the two air intake pipes.

5. The apparatus of claim 1, wherein the outlet portion comprises an air outlet hole penetrating through the outlet portion up and down to discharge the amplified compressed air,
the inlet portion comprises an outer wall surrounding an outer edge of the outlet portion, having the inlet hole penetrating up and down a region facing the discharge hole of the air intake pipe, and having inner jaws having a height higher than a top surface of the outer edge of the outlet portion, and
the amplifying unit further comprises a cover portion through which a through hole communicating with the air outlet hole is formed, and forming a communicating space between the top surface of the outer edge of the outlet portion and a bottom surface of an outer perimeter portion of the through hole as the outer perimeter portion is spaced apart from the top surface of the outlet portion by being placed on the inner jaws,
wherein the compressed air flowed in through the inlet hole is amplified and discharged through the air outlet hole by sucking in surrounding air as the compressed air passes through the communicating space.

6. The apparatus of claim 5, wherein the air outlet hole is connected to the top surface of the outer edge of the outlet portion in a curved shape as a diameter of an upper side of an inner circumferential surface of the air outlet hole increases upward, and
the compressed air flowed in through the inlet hole is amplified and discharged toward a lower side of the air outlet hole by sucking in surrounding air as the compressed air passes through the communicating space.

7. The apparatus of claim 5, wherein the cover portion placed on the inner jaws of the inlet portion is stably fixed as the top of the outer wall has an inward curved shape to surround the outer edge of the cover portion.

8. A method of manufacturing an apparatus for jetting compressed air, the method comprising:
preparing an air intake pipe having a discharge hole, from which compressed air received from outside the apparatus is discharged, on a outer surface having a curved or multilateral shape;
preparing an amplifying unit comprising an inlet portion wherein an inlet hole corresponding to the discharge hole is formed on a contact surface, and an outlet portion for amplifying and discharging the compressed air received through the inlet hole on the contact surface;
molding the contact surface of the inlet portion to have a curved or multilateral shape corresponding to the outer surface of the air intake pipe so that the contact surface of the inlet portion contacts and is combined to the outer surface of the air intake pipe; and
integrally forming the outer surface and the contact surface as one body by sealing and binding the outer surface and the contact surface without any gap via welding, bonding, screwing, or pressing.

9. The method of claim 8, wherein the amplifying unit comprises a combinable wing portion on an outer side of the amplifying unit so as to improve characteristics of the integrally forming by subsidiarily combining the outer surface of the air intake pipe and the contact surface of the amplifying unit, and
the method further comprises, after the integrally forming, combining the combinable wing portion and the air intake pipe via bolting, welding, or clamping.
